(19) Europäisches Patentamt / European Patent Office / Office européen des brevets

(11) **EP 4 083 958 B1**

(12) **EUROPEAN PATENT SPECIFICATION**

(45) Date of publication and mention
of the grant of the patent:
**14.02.2024 Bulletin 2024/07**

(21) Application number: **22165084.9**

(22) Date of filing: **29.03.2022**

(51) International Patent Classification (IPC):
**G08G 1/056** (2006.01)  **G08G 1/08** (2006.01)
**G08G 1/01** (2006.01)

(52) Cooperative Patent Classification (CPC):
**G08G 1/0145; G08G 1/0133; G08G 1/056;
G08G 1/08;** Y02A 30/60

(54) **METHOD AND APPARATUS FOR CONTROLLING VARIABLE LANE, DEVICE AND STORAGE MEDIUM**

VERFAHREN UND GERÄT ZUR STEUERUNG EINER VARIABLEN SPUR, VORRICHTUNG UND SPEICHERMEDIUM

PROCÉDÉ ET APPAREIL DE COMMANDE D'UNE VOIE VARIABLE, DISPOSITIF ET SUPPORT D'ENREGISTREMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.06.2021 CN 202110691964**

(43) Date of publication of application:
**02.11.2022 Bulletin 2022/44**

(73) Proprietor: **Apollo Intelligent Connectivity
(Beijing)
Technology Co., Ltd.
Beijing 100176 (CN)**

(72) Inventor: **XU, Qiqi
Beijing, 100176 (CN)**

(74) Representative: **Maiwald GmbH
Elisenhof
Elisenstraße 3
80335 München (DE)**

(56) References cited:
**EP-A1- 3 300 053**     **WO-A1-2018/072240**
**US-A1- 2019 122 546**

• **QING MA ET AL: "A New Control Strategy of
Variable Lane Based on Video Detection", 2014
FIFTH INTERNATIONAL CONFERENCE ON
INTELLIGENT SYSTEMS DESIGN AND
ENGINEERING APPLICATIONS, IEEE, 15 June
2014 (2014-06-15), pages 40-43, XP032698894,
DOI: 10.1109/ISDEA.2014.17 [retrieved on
2014-12-04]**

## Description

### TECHNICAL FIELD

The invention relates to a field of data processing technologies, in particular to a field of artificial intelligence (AI) technologies such as intelligent transportation, deep learning (DL) and big data processing, and to a method and an apparatus for controlling a variable lane, a computer device and a storage medium.

### BACKGROUND

With the increase of vehicles owned by users, the smooth traffic becomes a primary problem to be solved, and due to an unreasonable urban layout, a tidal phenomenon and surging traffic easily occur during the peak period. The traffic light at an intersection has pre-stored a specific signal control scheme in each time period, so that a reasonable adjustment cannot be made in time based on the current traffic situation, thus resulting in a traffic imbalance. A variable lane is a main means of planning traffic. It is an urgent problem to be solved how to plan a road network and alleviate traffic pressure by adjusting the variable channel.

US2019122546A1 discloses methods and systems for adjusting road conditions. EP3300053A1 discloses a traffic intersection driving assistance method and system.

### SUMMARY

The invention provides a method and an apparatus for controlling a variable lane, a device and a storage medium.

The invention is set out in the appended set of claims.

According to a first aspect of the invention, a method for controlling a variable lane is provided as defined in amended claim 1.

According to a second aspect of the invention, an apparatus for controlling a variable lane is provided as defined in amended claim 10.

According to a third aspect of embodiments of the invention, a computer device is provided, and includes a processor and a memory for storing a computer program executable by the processor. The processor is configured to perform the method as described in the first aspect when the computer program is executed.

According to a fourth aspect of the invention, a non-transitory computer readable storage medium stored with a computer program thereon. When the computer program is executed by the processor, the method as described in the first aspect is implemented.

According to a fifth aspect of the invention, a computer program product is provided. The instructions in the computer program product are performed by a processor so as to perform the method as described in the first aspect.

Therefore, the imbalance coefficient is taken as an indicator to finally determine whether the direction of the variable lane needs to be changed. By calculating the saturation corresponding to the variable lane and the saturation corresponding to the lane adjacent to the variable lane, it is determined whether the saturations are unbalanced, thus providing a reliable basis for a solution of controlling a variable lane. As such, the traffic capacity in various directions may be improved as much as possible through reliable control of the variable lane and the road network may be effectively planned.

It should be understood that, the content described in the part is not intended to identify key or important features of embodiments of the invention, nor intended to limit the scope of the invention. Other features of the invention will be easy to understand through the following specification.

### BRIEF DESCRIPTION OF THE DRAWINGS

The drawings are used to better understand the solution, and do not constitute a limitation to the invention.

FIG. 1 is a flowchart of a method for controlling a variable lane according to an embodiment of the invention.
FIG. 2 is a flowchart of a method for controlling a variable lane according to another embodiment of the invention.
FIG. 3 is a flowchart of a method for controlling a variable lane according to yet another embodiment of the invention.
FIG. 4 is a block diagram of an apparatus for controlling a variable lane according to an embodiment of the invention.
FIG. 5 is a block diagram of an electronic device configured to perform a method for controlling a variable lane in the embodiment of the invention.

## DETAILED DESCRIPTION

Embodiments of the present invention are described as below with reference to the accompanying drawings, which include various details of embodiments of the present invention to facilitate understanding, and should be considered as merely exemplary. Similarly, for clarity and conciseness, descriptions of well-known functions and structures are omitted in the following descriptions.

The embodiments of the invention relate to a field of artificial intelligence (AI) technologies such as deep learning, intelligent transportation and big data processing.

Artificial Intelligence (AI) is a new science of technology that studies and develops theories, methods, technologies and application systems configured to simulate, extend and expand human intelligence.

Deep learning (DL) learns inherent law and representation hierarchy of sample data, and information obtained in the learning process is of great help in interpretation of data such as texts, images and sounds. The final goal of DL is that the machine may have analytic learning ability like human beings, which may recognize data such as words, images, sounds, etc..

Intelligent transportation is a real-time, accurate and efficient comprehensive traffic transportation management system established by integrating and applying advanced information technology, data communication transmission technology, electronic sensing technology, control technology, computer technology and the like to a whole ground traffic management system, which plays a role in a wide range and all directions and includes a traffic information service system and a traffic management system.

Big data processing refers to a process of analyzing and processing large-scale data by means of artificial intelligence, and big data may be summarized as 5 Vs, that is, volume, velocity, variety, value, veracity.

The method for controlling a variable lane is performed by an apparatus for controlling a variable lane according to the invention, and may also be performed by an electronic device according to the invention. The electronic device may include but not limited to a terminal, such as a desktop computer and a tablet computer, and may also be a server. The apparatus for controlling a variable lane (which is referred to as an "apparatus" below) is configured to perform a method for controlling a variable lane according to the invention, and does not constitute a limitation of the invention.

The method and the apparatus for controlling a variable lane, the computer device and the storage medium according to the invention are described as below referring to accompanying drawings.

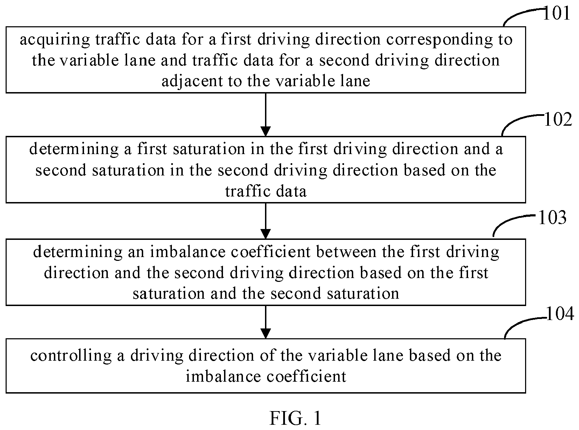

FIG. 1 is a flowchart of a method for controlling a variable lane according to an embodiment of the invention.

As illustrated in FIG. 1, the method for controlling a variable lane may include the following steps at 101-104.

At 101, traffic data for a first driving direction corresponding to a variable lane and traffic data for a second driving direction adjacent to the variable lane are acquired.

It should be noted that, since a traffic flow is relatively concentrated during peak hours while there are few lanes, a variable lane is generally set at an intersection, which flexibly regulates a flow direction based on the flow direction characteristics of the traffic flow in different time periods, thus relieving the traffic pressure. The variable lane refers to a lane with multiple oblique lines drawn on its inner side of the lane, which can change an indication direction according to the traffic flow at any time. For example, the vehicle entering the variable lane needs to be driven along a direction indicated by a guide arrow in an indication sign mounted above the variable lane. When a red fork light above the variable lane turns on, the vehicle is not allowed to drive into the variable lane. The driving direction for the variable lane is determined based on the traffic flow of vehicles. For example, when the traffic flow in a left one of the variable lane is large, the sign of the variable lane may indicate a left turn arrow to relieve the pressure of the left lane. Similarly, when the pressure in a right lane of the variable lane is large, the sign of the variable lane may indicate a right turn arrow.

The first driving direction may be a traffic flow direction corresponding to the current variable lane, such as a straight direction, a left turn direction, which is not limited herein. The second driving direction may be a traffic flow direction corresponding to a lane adjacent to the variable lane.

Alternatively, there may be a plurality of methods for acquiring traffic data. For example, the traffic data may be acquired by performing image recognition on video stream information; alternatively, the traffic data may be acquired by sensing vehicles through geomagnetism buried under both sides of the variable lane; alternatively, the traffic data may be acquired by analyzing trajectory data information in the Internet of vehicles. In addition, the traffic data may be also acquired by performing detection and sense through a sensor, a communication device, a radar, or the like, which is not limited herein.

Alternatively, the traffic data may be acquired by combining two or more of the above methods for acquiring traffic data. Therefore, reliable data support may be provided for overall analysis of a traffic network, and conditions are provided for flexibly regulating the variable lane, which improves the feasibility and universality of the embodiments of the invention.

Traffic data may be any data that may represent driving states for the first driving direction and the second driving direction. Alternatively, the traffic data may be a green light duration, a waste duration, a red light queue length, and a saturated time headway in each signal period, which is not limited herein.

In the invention, a time difference between the front end of two vehicles (e.g., a front vehicle and a rear vehicle) passing through the same location may be taken as a time headway. It may be understood that, in actual applications, when the green light is on, a difference for the time headway between vehicles may gradually be changed from relatively large to stable with the increase of passing vehicles. In the invention, the gradually stable time headway may be taken as the saturated time headway for any lane.

The waste duration may be a duration when there may be no vehicle to pass through the lane in both directions due to visual delay and vehicle start time.

The red light queue length may be a vehicle queue length during a time period when the red light is on, for example, a distance from a head of the vehicle at an intersection of any lane to a tail of the last vehicle at the queue tail, which is not limited herein.

At 102, a first saturation in the first driving direction and a second saturation in the second driving direction are determined based on the traffic data.

It may be understood that, the saturation may be configured to represent a ratio of an actual traffic flow of a lane to the saturated traffic flow of the lane. The invention may first calculate a first saturation in a first driving direction corresponding to the variable lane and a second saturation in a second driving direction adjacent to the variable lane, and determine a solution for controlling a variable lane based on the first saturation and the second saturation.

The first saturation may be a saturation of a variable lane corresponding to a first driving direction, and the second saturation may be a saturation of a lane adjacent to the variable lane corresponding to a second driving direction.

It should be noted that, the traffic flow direction of vehicles in each lane is controlled in nature by a traffic light. As a possible implementation, the invention may calculate a saturation corresponding to the lane based on the green light duration, the waste duration, the saturated time headway and the red light queue length.

Alternatively, the apparatus may determine a first saturation in the first driving direction based on the green light duration, the waste duration, the red light queue length, and the saturated time headway within each signal period in the first driving direction, and determine a second saturation in the second driving direction based on the green light duration, the waste duration, the red light queue length, and the saturated time headway within each signal period in the second driving direction.

For convenience of description, taking traffic data corresponding to the first driving direction for an example, denoting the green light duration as green(Lane_1), the waste duration as waste(Lane_1), the red light queue length as Queue_Red(Lane_1), and the saturated time headway as H(Lane_1), the first saturation DS(Lane_1) may be calculated by the following formula:

$$DS(Lane\_1) = [green(Lane\_1) - waste(Lane\_1) + Queue\_Red(Lane\_1) * H(Lane\_1)] / green(Lane\_1).$$

It should be noted that the second saturation DS(Lane_2) also may be calculated referring to the above.

As a possible implementation, the invention may further calculate the saturation based on the green light duration and the waste duration. For example, the waste duration is subtracted from the green light duration to acquire effective green light duration, and then the ratio of the effective green light duration to the green light duration is calculated as a degree of saturation. Therefore, a first saturation in the first driving direction and a second saturation in the second driving direction are calculated respectively based on the traffic data for the first driving direction corresponding to the variable lane and the traffic data for the second driving direction adjacent to the variable lane, which are not limited herein.

At 103, an imbalance coefficient between the first driving direction and the second driving direction is determined based on the first saturation and the second saturation.

It should be noted that, after the first saturation and the second saturation are acquired, the apparatus may determine an imbalance coefficient between the first driving direction and the second driving direction accordingly. The imbalance coefficient may be configured to represent an imbalance situation of a first saturation corresponding to the first driving direction and a second saturation corresponding to the second driving direction, so as to provide a basis for a suitable solution for controlling a variable lane.

For convenience of description, denoting the first saturation as DS(Lane_1), and the second saturation as DS(Lane_2), an imbalance coefficient DS_Diff_Rate may be calculated by the following formula:

$$DS\_Diff\_Rate = [DS(Lane\_1) - DS(Lane\_2)] / DS(Lane\_1).$$

At 104, a driving direction of the variable lane may be controlled based on the imbalance coefficient.

It should be noted that, after determining the imbalance coefficient, the apparatus may control a driving direction of the variable lane based on the imbalance coefficient. For example, the variable lane is controlled to maintain the original first driving direction, or the variable lane is changed to a second driving direction.

For example, a reference range of the imbalance coefficient may be preset. In response to the imbalance coefficient being within the reference range, the variable lane may be controlled to maintain the original first driving direction unchanged, and in response to the imbalance coefficient being not within the reference range, the first driving direction of the current variable lane may be changed to the second driving direction, which is not limited herein. It should be noted that, the reference range may be preset based on previous historical data, and may be set based on actual road conditions of the current variable lane, which is not limited herein.

In the embodiments of the invention, the apparatus first acquires the traffic data for the first driving direction corresponding to the variable lane and the traffic data for the second driving direction adjacent to the variable lane, determines the first saturation in the first driving direction and the second saturation in the second driving direction based on the traffic data, determines the imbalance coefficient between the first driving direction and the second driving direction based on the first saturation and the second saturation, and controls the driving direction of the variable lane based on the imbalance coefficient. Therefore, the imbalance coefficient is taken as an indicator to finally determine whether the direction of the variable lane needs to be changed. By calculating the saturation corresponding to the variable lane and the saturation corresponding to the lane adjacent to the variable lane, it is determined whether the saturations are unbalanced, thus providing a reliable basis for a solution of controlling a variable lane. As such, the traffic capacity in various directions may be improved as much as possible through reliable control of the variable lane and the road network may be effectively planned.

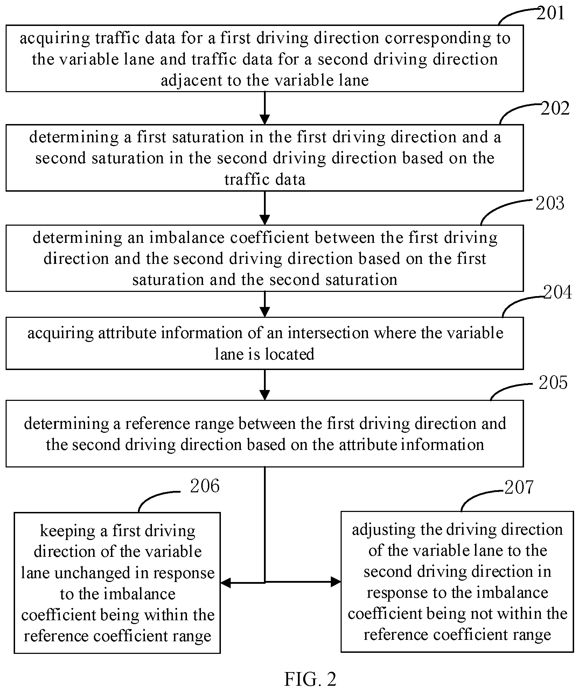

FIG. 2 is a flowchart of a method for controlling a variable lane according to another embodiment of the invention.

As illustrated in FIG. 2, the method for controlling a variable lane may include the following steps at 201-207.

At 201, traffic data for a first driving direction corresponding to a variable lane and traffic data for a second driving direction adjacent to the variable lane are acquired.

At 202, a first saturation in the first driving direction and a second saturation in the second driving direction are determined based on the traffic data.

At 203, an imbalance coefficient between the first driving direction and the second driving direction is determined based on the first saturation and the second saturation.

It should be noted that, the specific implementations at 201, 202 and 203 may refer to the above embodiments, which are not repeated here.

At 204, it is acquired attribute information of an intersection where the variable lane is located.

The attribute information may be a number of lanes and lane types at the intersection where the variable lane is located, construction situation around the intersection, a slope of the intersection, etc., which are not limited here.

As a possible implementation, the apparatus may first acquire video information of the intersection where the variable lane is located, and acquire the situation of the intersection where the variable lane is located by performing image processing on the video images, for example, whether construction is carried out, whether a roadblock is set and the slope and width information of the intersection, which are not limited here.

At 205, a reference range between the first driving direction and the second driving direction may be determined based on the attribute information.

It should be noted that, since information such as the slope of the intersection, signs, and the construction situation may affect traffic conditions of each lane at the current intersection, such as a vehicle queue length, residence time and passing time. Therefore, the apparatus may determine a reference range corresponding to the first driving direction and the second driving direction at the intersection where the current variable lane is located by determining the reference range between the first driving direction and the second driving direction based on the attribute information, thus facilitating to make a reasonable lane adjustment and effectively avoiding a traffic imbalance.

At 206, in response to the imbalance coefficient being within the reference range, a first driving direction of the variable lane keeps unchanged.

It should be noted that, in response to the imbalance coefficient being within the reference range, it indicates that the pressure of the current variable lane in the first direction is relatively large. Therefore, the first driving direction of the variable lane may keep unchanged, so as to relieve traffic pressure in the first driving direction.

As a possible implementation, when the imbalance coefficient is within a reference range and the current variable lane or the lane adjacent to the variable lane satisfies other necessary conditions, the apparatus needs to adjust a driving direction of the variable lane. For example, in response to the red light queue length in the first driving direction being greater than a first threshold of red light queue, or in response to the red light queue length in the second driving direction being greater than a second threshold of red light queue, the driving direction of the variable lane may be adjusted to a second driving direction. It may be described as below in the invention.

Alternatively, a first threshold of red light queue corresponding to the first driving direction and a second threshold of red light queue corresponding to the second driving direction are acquired first.

The threshold of red light queue may be a threshold of a red light queue length. The threshold may be a preset threshold determined based on the previous historical data information, or, and further may be a threshold determined based on current traffic data and attribute information of the intersection, which is not limited here.

The first threshold of red light queue corresponds to a first driving direction, and may be determined based on the traffic data of the variable lane. The second threshold of red light queue corresponds to a second driving direction, and may be determined based on the traffic data of the lane adjacent to the variable lane.

Further, in response to the red light queue length in the first driving direction being greater than the first threshold of red light queue, or in response to the red light queue length in the second driving direction being greater than the second threshold of red light queue, the driving direction of the variable lane may be adjusted to a second driving direction.

For convenience of description, a red light queue length of the variable lane in the first driving direction, that is, a queue value at the moment when the red light is on is denoted as $\text{Queue1\_Red}(\text{lane}_i)$, and the threshold of red light queue corresponding to the variable lane is denoted as $\text{Queue1\_Red\_min}$. When $\text{Queue1\_Red}(\text{lane}_i) > \text{Queue1\_Red\_min}$, the apparatus needs to change a driving direction of the current variable lane to a second driving direction, thus relieving the traffic pressure.

At 207, the driving direction of the variable lane may be adjusted to a second driving direction in response to the imbalance coefficient being not within the reference range.

It should be noted that, when the imbalance coefficient is not within a reference range, which indicates that the traffic pressure of the variable lane is less than that of the adjacent lane, the apparatus may adjust the driving direction of the variable lane to a second driving direction. For example, the straight direction is changed to a left turn direction, thus reducing the stranded vehicles in the second driving direction, decreasing a vehicle queue length and a driving delay, and improving a traffic capability.

In embodiments of the invention, the apparatus first acquires the traffic data for the first driving direction corresponding to the variable lane and the traffic data for the second driving direction adjacent to the variable lane, determines the first saturation in the first driving direction and the second saturation in the second driving direction based on the traffic data, determines the imbalance coefficient between the first driving direction and the second driving direction based on the first saturation and the second saturation, acquires attribute information of the intersection where the variable lane is located, determines a reference range between the first driving direction and the second driving direction and based on the attribute information, keeps a first driving direction of the variable lane unchanged in response to the imbalance coefficient being within the reference range, and adjusts the driving direction of the variable lane to a second driving direction in response to the imbalance coefficient being not within the reference range. As such, the reference range is determined based on the attribute information of the intersection, and the reference range of the imbalance coefficient may be determined based on the actual situations of the intersection, which provides a basis for determining whether the variable lane needs to be changed in real time, and further may reduce the stranded vehicles, the vehicle queue length and the driving delay.

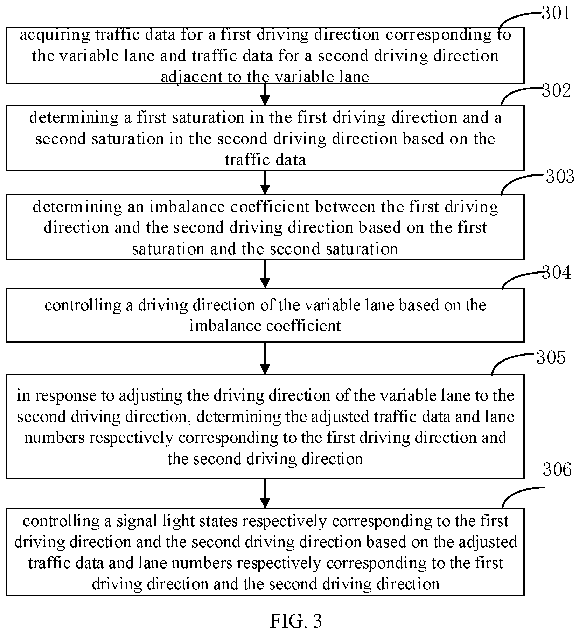

FIG. 3 is a flowchart of a method for controlling a variable lane according to yet another embodiment of the invention.

As illustrated in FIG. 3, the method for controlling a variable lane may include the following steps at 301-306.

At 301, traffic data for a first driving direction corresponding to a variable lane and traffic data for a second driving direction adjacent to the variable lane are acquired.

At 302, a first saturation in the first driving direction and a second saturation in the second driving direction are determined based on the traffic data.

At 303, an imbalance coefficient between the first driving direction and the second driving direction is determined based on the first saturation and the second saturation.

At 304, a driving direction of the variable lane may be controlled based on the imbalance coefficient.

It should be noted that, the specific implementations at 301, 302, 303 and 304 may refer to the above embodiments, which are not repeated here.

At 305, in response to adjusting the driving direction of the variable lane to the second driving direction, the adjusted traffic data and lane numbers respectively corresponding to the first driving direction and the second driving direction are determined.

It should be noted that, in case that the driving direction of the variable lane is adjusted to the second driving direction, the traffic data respectively corresponding to the first and second driving directions may change as their respective lane numbers change. In the invention, in order to avoid an abnormal situation in the first driving direction caused due to the driving direction change of the variable lane, traffic data and vehicle number in the first driving direction and traffic data and vehicle number in the second driving direction may continue to be monitored, and the variable lane and the traffic light timing may be timely and effectively controlled based on the actual needs.

In the invention, the specific implementation of acquiring the adjusted traffic data and lane numbers respectively corresponding to the first driving direction and the second driving direction may refer to the relevant description of the above embodiments, which is not repeated here.

At 306, traffic light states respectively corresponding to the first driving direction and the second driving direction are controlled based on the adjusted traffic data and lane numbers respectively corresponding to the first driving direction and the second driving direction.

As a possible implementation, after the adjusted traffic data and lane numbers respectively corresponding to the first driving direction and the second driving direction are acquired, a green light signal ratio may be calculated based on each of the acquired traffic data and the vehicle number information. For example, a first green signal ratio corresponding to the first driving direction and a second green signal ratio corresponding to the second driving direction may be determined based on a period duration of a traffic light, a total waste duration in each signal period, a red light duration within each signal period in each driving direction, and a traffic flow in each driving direction from the traffic data.

It should be noted that, the green signal ratio may be generally a ratio of effective green light duration in any signal period to a signal period duration. A time loss may occur inevitably when the traffic light performs signal switching. For example, when the green light is about to end, the driver is stopped at a slow speed to wait and any vehicle cannot be driven in the loss time. Therefore, the green signal ratio may be calculated based on the actual passing time of the vehicle, that is, the effective green light duration.

In the invention, in order to determine the green signal ratio in each driving direction more accurately, it may be calculated based on the period duration of the traffic light, the total waste duration in each signal period, the red light duration within each signal period in each driving direction, and the traffic flow in each driving direction from the traffic data.

Alternatively, the green signal ratio may be calculated by the following formula:

$$ g_i = (C_0 - L)\frac{y_i}{Y} - A + l_i \, , $$

where $C_0$ is a period duration of a traffic light, L is a total waste duration in each signal period, Y is a sum of traffic flows in various driving directions, A is a red light duration in each signal duration, $y_i$ is a traffic flow in any driving direction i, $l_i$ is an initial waste duration in the driving direction i, and $g_i$ is a green signal ratio corresponding to any driving direction i.

It should be noted that, a first green signal ratio g1 corresponding to the first driving direction and a second green signal ratio g2 corresponding to the second driving direction may be calculated in the above formula based on the period duration of the traffic light, the total waste duration in each signal period, the red light duration within each signal period in each driving direction and the traffic flow in each driving direction, from the traffic data respectively corresponding to the first driving direction and the second driving direction.

Further, a first predicted traffic volume corresponding to the first driving direction and a second predicted traffic volume corresponding to the second driving direction may be determined based on the adjusted lane number corresponding to each driving direction, a historical lane number and a historical traffic volume associated with the current moment.

Alternatively, the first or second predicted traffic volume may be calculated by the following formula:

$$ R_i = r_i \frac{L_i}{l_i} $$

where $R_i$ is a predicted traffic volume in any driving direction i, $r_i$ is a historical traffic volume corresponding to the driving direction i, $L_i$ is an adjusted lane number corresponding to the driving direction i, and $l_i$ is a historical lane number associated with the current moment.

It should be noted that, the apparatus may determine the first predicted traffic volume corresponding to the first driving direction based on an adjusted lane number corresponding to the first driving direction, a first historical lane number and a first historical traffic volume associated with the current moment in the first driving direction; and the apparatus may determine the second predicted traffic volume corresponding to the second driving direction based on an adjusted lane number corresponding to the second driving direction, and a second historical lane number and a second historical traffic volume associated with the current moment in the second driving direction.

The first historical lane number may be a lane number in the first driving direction of the intersection at a historical moment corresponding to the current moment, and the second historical lane number may be a lane number in the second driving direction of the intersection at a historical moment corresponding to the current moment. The first historical traffic volume may be a number of historical vehicles passing in the first driving direction, and the second historical traffic volume may be a number of historical vehicles passing in the second driving direction.

That is, the predicted traffic volume corresponding to any driving direction may be determined by calculating the ratio of the adjusted lane number in any driving direction to the historical lane number associated with the current moment, and multiplying the ratio by the corresponding historical traffic volume.

Further, a sum of green light durations in each signal period corresponding to the first driving direction is determined based on the first green signal ratio and the first predicted traffic volume, and a sum of green light durations in each signal period corresponding to the second driving direction is determined based on the second green signal ratio and the second predicted traffic volume.

Alternatively, a sum of green light durations in each signal period corresponding to the first driving direction and a sum of green light durations in each signal period corresponding to the second driving direction may be determined by the following formula $G_i$:

$$G_i = \sum\, g_i \frac{R_i}{\sum R_i}$$

where $g_i$ is a green signal ratio in any driving direction i, and $R_i$ is a predicted traffic flow in any driving direction i.

Based on the above formula, a sum of green light durations corresponding to the first driving direction may be calculated based on the first green light ratio and the first predicted traffic volume, and a sum of green light durations corresponding to the second driving direction may be calculated based on the second green light ratio and the second predicted traffic volume.

Further, based on a preset green light duration difference range and the sum of green light durations, a first green light duration in each signal period corresponding to the first driving direction and a second green light duration in each signal period corresponding to the second driving direction may be determined.

The first green light duration may be green time corresponding to the first driving direction after switching the variable lane, and the second green time may be green time corresponding to the second driving direction after switching the variable lane.

Alternatively, it may be calculated by the following formula:

$$G_{vlan} > g_{vlan} + \Delta_{vlan}$$

where taking vlan as a driving direction after a variable lane is switched, $\Delta_{vlan}$ is a preset difference range of green light duration, $g_{vlan}$ is a green light duration corresponding to the driving direction vlan before a variable lane is switched, and $G_{vlan}$ is a green light duration corresponding to the driving direction vlan after a variable lane is switched.

It should be noted that, in response to the sum of green light durations corresponding to any driving direction, $G_{vlan}$, satisfying the condition in the above formula (which is greater than the preset difference range of green light duration and the green light duration corresponding to the driving direction before the variable lane is switched), a traffic light does not need to be adjusted. When $G_{vlan}$ does not satisfy the condition in the above formula , the traffic light may be reconfigured based on the calculated green light duration.

Therefore, a first green light duration in each signal period corresponding to the first driving direction and a second green light duration in each signal period corresponding to the second driving direction may be calculated respectively from the above formula.

In the embodiments of the invention, the apparatus first acquires the traffic data for the first driving direction corresponding to the variable lane and the traffic data for the second driving direction adjacent to the variable lane, determines the first saturation in the first driving direction and the second saturation in the second driving direction based on the traffic data, and determines the imbalance coefficient between the first driving direction and the second driving direction based on the first saturation and the second saturation. In case that the driving direction of the variable lane is adjusted to the second driving direction, the adjusted traffic data and lane numbers respectively corresponding to the first driving direction and the second driving direction are determined. Finally, the traffic light states respectively corresponding to the first driving direction and the second driving direction are controlled based on the adjusted traffic data and lane numbers respectively corresponding to the first driving direction and the second driving direction. As such, the traffic capability may be adjusted on time by controlling the traffic light states, so as to obtain an optimal allocation duration of the traffic light. Therefore, dynamic combination optimization may be achieved from time and space, which avoids a poor effect caused by a single control, with a good feasibility and universality.

In order to achieve the above embodiments, the invention further provides an apparatus for controlling a variable lane.

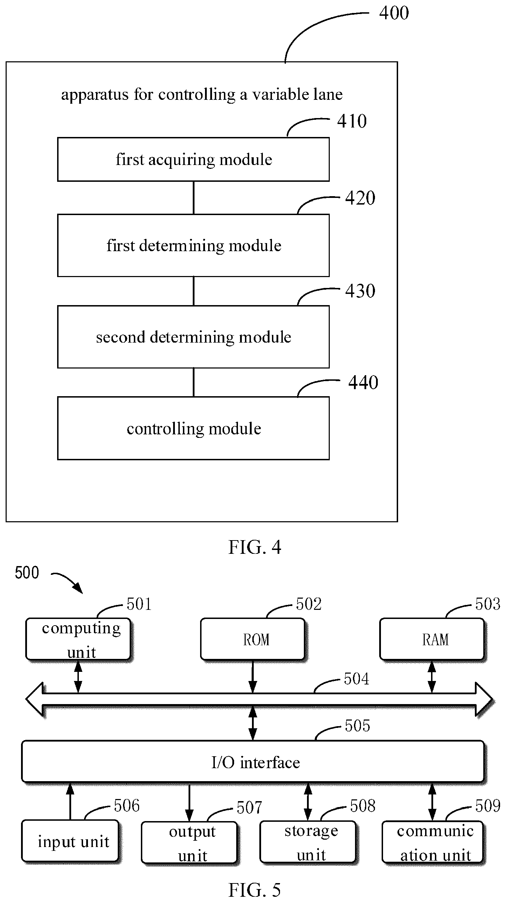

FIG. 4 is a structural schematic diagram of an apparatus for controlling a variable lane according to the embodiment of the invention.

As illustrated in FIG. 4, the apparatus 400 for controlling a variable lane may include a first acquiring module 410, a first determining module 420, a second determining module 430 and a controlling module 440.

The first acquiring module 410 is configured to acquire traffic data for a first driving direction corresponding to the variable lane and traffic data for a second driving direction adjacent to the variable lane; the first determining module 420 is configured to determine a first saturation in the first driving direction and a second saturation in the second driving direction based on the traffic data; the second determining module 430 is configured to determine an imbalance coefficient between the first driving direction and the second driving direction based on the first saturation and the second saturation; and the controlling module 440 is configured to control a driving direction of the variable lane based on the imbalance coefficient.

As a possible implementation, the traffic data includes a green light duration, a waste duration, a red light queue length, and a saturated time headway in each signal period, the first determining module is specifically configured to: determine a first saturation in the first driving direction based on the green light duration, the waste duration, the red light queue length, and the saturated time headway in each signal period in the first driving direction; and determine a second saturation in the second driving direction based on the green light duration, the waste duration, the red light queue length, and the saturated time headway in each signal period in the second driving direction.

As a possible implementation, the controlling module is specifically configured to: acquire attribute information of an intersection where the variable lane is located; determine a reference range between the first driving direction and the second driving direction based on the attribute information; keep a first driving direction of the variable lane unchanged in response to the imbalance coefficient being within the reference range; and adjust the driving direction of the variable lane to a second driving direction in response to the imbalance coefficient being not within the reference range.

As a possible implementation, the traffic data includes a red light queue length. The apparatus further includes a second acquiring module and an adjusting module.

The second acquiring module is configured to acquire a first threshold of red light queue corresponding to the first driving direction and a second threshold of red light queue corresponding to the second driving direction; and the adjusting module is configured to in response to the red light queue length in the first driving direction being greater than the first threshold of red light queue, or in response to the red light queue length in the second driving direction being greater than the second threshold of red light queue, adjust the driving direction of the variable lane to the second driving direction.

As a possible implementation, the controlling module further includes a determining unit and a determining unit.

The determining unit is configured to in response to adjusting the driving direction of the variable lane to the second driving direction, determine the adjusted traffic data and lane numbers respectively corresponding to the first driving direction and the second driving direction; and the controlling unit is configured to control traffic light states respectively corresponding to the first driving direction and the second driving direction based on the adjusted traffic data and lane numbers respectively corresponding to the first driving direction and the second driving direction.

As a possible implementation, the controlling module includes a first determining subunit, a second determining subunit, and a third determining subunit.

The first determining subunit is configured to determine a first green signal ratio corresponding to the first driving direction and a second green signal ratio corresponding to the second driving direction based on a period duration of a traffic light, a total waste duration in each signal period, a red light duration within each signal period in each driving direction and a traffic flow in each driving direction from the traffic data; the second determining subunit is configured to determine a first predicted traffic volume corresponding to the first driving direction and a second predicted traffic volume corresponding to the second driving direction based on the adjusted lane number corresponding to each driving direction, a historical lane number and a historical traffic volume associated with the current moment; and the third determining subunit is configured to determine a sum of green light durations in each signal period corresponding to the first driving direction and the second driving direction, based on the first green signal ratio, the second green signal ratio, the first predicted traffic volume and the second predicted traffic volume.

As a possible implementation, the second determining subunit is specifically configured to: determine a first predicted traffic volume corresponding to the first driving direction based on the adjusted lane number corresponding to the first driving direction, a first historical lane number and a first historical traffic volume associated with the current moment in the first driving direction; and determine a second predicted traffic volume corresponding to the first driving direction based on the adjusted lane number corresponding to the second driving direction, a second historical lane number and a second historical traffic volume associated with the current moment in the second driving direction.

As a possible implementation, the third determining subunit is further configured to: determine a first green light duration in each signal period corresponding to the first driving direction and a second green light duration in each signal period corresponding to the second driving direction based on a preset green light duration difference range and the sum of green light durations.

In embodiments of the invention, the apparatus first acquires traffic data for a first driving direction corresponding to the variable lane and traffic data for a second driving direction adjacent to the variable lane, then determines a first saturation in the first driving direction and a second saturation in the second driving direction based on the traffic data, and determines an imbalance coefficient between the first driving direction and the second driving direction based on the first saturation and the second saturation, and controls a driving direction of the variable lane based on the imbalance coefficient. Therefore, the imbalance coefficient is taken as an indicator, to finally determine whether the direction of the variable lane needs to be changed. By calculating saturations corresponding to the variable lane and the lane adjacent to the variable lane, it is determined whether the saturations are unbalanced, thereby providing a reliable basis for providing a solution for controlling a variable lane, so that through reliable control of the variable lane, the traffic capacity in all directions may be improved as much as possible and a road network may be effectively planned.

According to the embodiments of the invention, the invention further provides an electronic device, a readable storage medium and a computer program product.

FIG. 5 illustrates a schematic block diagram of an example electronic device 500 configured to execute the embodiment of the invention. An electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the invention described and/or required herein.

As illustrated in FIG. 5, the device 500 includes a computing unit 501, which may execute various appropriate actions and processings based on a computer program stored in a read-only memory (ROM) 502 or a computer program loaded into a random access memory (RAM) 503 from a storage unit 505. In the RAM 503, various programs and data required for operation of the device 500 may also be stored. The computing unit 501, the ROM 502, and the RAM 503 are connected to each other through a bus 504. An input/output (I/O) interface 505 is also connected to a bus 504.

Several components in the device 500 are connected to the I/O interface 505, and include: an input unit 506, for example, a keyboard, a mouse, etc.; an output unit 507, for example, various types of displays, speakers, etc.; a storage unit 508, for example, a magnetic disk, an optical disk, etc.; and a communication unit 509, for example, a network card, a modem, a wireless communication transceiver, etc. The communication unit 509 allows the device 500 to exchange information/data with other devices over a computer network such as the Internet and/or various telecommunication networks.

A computing unit 501 may be various types of general and/or dedicated processing components with processing and computing ability. Some examples of a computing unit 501 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 501 performs various methods and processings described above, for example, a method for controlling a variable lane. For example, in some embodiments, a method for controlling a variable lane may be achieved as a computer software program tangibly included in a machine-readable medium, such as a storage unit 508. In some embodiments, a part or all of computer programs may be loaded and/or installed on the device 500 through a ROM 502 and/or a communication unit 509. When the computer programs are loaded in a RAM 503 and performed by a computing unit 501, one or more steps of the above method for controlling a variable lane may be performed. Alternatively, in other embodiments, the computing unit 501 may be configured to perform the method for controlling a variable lane by any other suitable means (for example, by means of a firmware).

Various implementation modes of the systems and technologies described above may be implemented in a digital electronic circuit system, a field programmable gate array (FPGA), an application-specific integrated circuit (ASIC), an application specific standard product (ASSP), a system-on-chip (SOC) system, a complex programmable logic device, a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the present invention may be written with one or any combination of a plurality of programming languages. The programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be performed completely or partly on the machine, performed partly on the machine as an independent software package and performed partly or completely on the remote machine or server.

In the context of the invention, a machine-readable medium may be a tangible medium that may contain or store a program intended for use in or in conjunction with an instruction execution system, apparatus, or device. A machine readable medium may be a machine readable signal medium or a machine readable storage medium. A machine readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a random access memory (RAM), a read-only memory (ROM), an erasable programmable read-only memory (an EPROM or a flash memory), an optical fiber device, and a portable optical disk read-only memory (CDROM), an optical storage device, a magnetic storage device, or any appropriate combination of the above.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a voice input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), an internet and a blockchain network.

The computer system may include a client and a server. The client and server are generally far away from each other and generally interact with each other through a communication network. The relationship between the client and the server is generated by computer programs running on the corresponding computer and having a client-server relationship with each other. A server may be a cloud server, also known as a cloud computing server or a cloud host, is a host product in a cloud computing service system, to solve the shortcomings of large management difficulty and weak business expansibility existed in the conventional physical host and Virtual Private Server (VPS) service. A server further may be a server with a distributed system, or a server in combination with a blockchain.

In the embodiments of the invention, the apparatus first acquires the traffic data for the first driving direction corresponding to the variable lane and the traffic data for the second driving direction adjacent to the variable lane, determines the first saturation in the first driving direction and the second saturation in the second driving direction based on the traffic data, determines the imbalance coefficient between the first driving direction and the second driving direction based on the first saturation and the second saturation, and controls the driving direction of the variable lane based on the imbalance coefficient. Therefore, the imbalance coefficient is taken as an indicator to finally determine whether the direction of the variable lane needs to be changed. By calculating the saturation corresponding to the variable lane and the saturation corresponding to the lane adjacent to the variable lane, it is determined whether the saturations are unbalanced, thus providing a reliable basis for a solution of controlling a variable lane. As such, the traffic capacity in various directions may be improved as much as possible through reliable control of the variable lane and the road network may be effectively planned.

It should be understood that, various forms of procedures shown above may be configured to reorder, add or delete steps. For example, steps described in the invention may be executed in parallel, sequentially, or in different orders, as long as the desired result of the technical solution disclosed in the present invention may be achieved, which will not be limited herein.

The above specific implementations do not constitute a limitation on the protection scope of the invention.

**Claims**

1. A method for controlling a variable lane provided at an intersection with a traffic light, a direction of the variable lane being indicated by a guide arrow in an indication sign mounted above the variable lane, comprising:

   acquiring (101, 201, 301) first traffic data for a first driving direction corresponding to the variable lane and second traffic data for a second driving direction of a lane adjacent to the variable lane;
   determining (102, 202, 302) a first saturation in the first driving direction based on the first traffic data and determining a second saturation in the second driving direction based on the second traffic data;
   determining (103, 203, 303) an imbalance coefficient between the first driving direction and the second driving direction based on the first saturation and the second saturation; and
   controlling (104, 304) a driving direction of the variable lane based on the imbalance coefficient;
   **characterized in that**, determining the first saturation in the first driving direction and the second saturation in the second driving direction comprises:

determining the first saturation based on a green light duration, a waste duration, a red light queue length, and a saturated time headway in each signal period comprised in the first traffic data for the first driving direction; and

determining the second saturation based on a green light duration, a waste duration, a red light queue length, and a saturated time headway in each signal period comprised in the second traffic data for the second driving direction,

wherein the first saturation represents a ratio of an actual traffic flow of the variable lane to a saturated traffic flow of the variable lane, and the second saturation represents a ratio of an actual traffic flow of the lane adjacent to the variable lane to a saturated traffic flow of the lane adjacent to the variable lane.

2. The method of claim 1, wherein controlling a driving direction of the variable lane based on the imbalance coefficient comprises:

acquiring (204) attribute information of an intersection where the variable lane is located;

determining (205) a reference range between the first driving direction and the second driving direction based on the attribute information;

keeping (206) a first driving direction of the variable lane unchanged in response to the imbalance coefficient being within the reference range; and

adjusting (207) the variable lane from the first driving direction to the second driving direction in response to the imbalance coefficient being not within the reference range.

3. The method of claim 1, wherein the method further comprises:

acquiring a first threshold of red light queue in the first driving direction and a second threshold of red light queue in the second driving direction; and

in response to a red light queue length in the first driving direction being greater than the first threshold of red light queue, or in response to a red light queue length in the second driving direction being greater than the second threshold of red light queue, adjusting the variable lane from the first driving direction to the second driving direction.

4. The method of any of claims 1 to 3, wherein in response to adjusting the variable lane from the first driving direction to the second driving direction, the method further comprises:

determining (305) adjusted first traffic data and first lane number in the first driving direction; and

controlling (306) a traffic light state in the first driving direction based on the adjusted first traffic data and first lane number.

5. The method of any of claims 1 to 4, wherein controlling a traffic light state in the first driving direction based on the adjusted first traffic data and first lane number comprises:

determining a first green signal ratio in the first driving direction based on a period duration of the traffic light, a total waste duration in each signal period, a red light duration within each signal period and a traffic flow from the adjusted first traffic data;

determining a first predicted traffic volume in the first driving direction based on the adjusted first lane number, a first historical lane number and a first historical traffic volume; and

determining a sum of green light durations in each signal period in the first driving direction based on the first green signal ratio and the first predicted traffic volume.

6. The method of any of claims 1 to 5, wherein after determining a sum of green light durations in each signal period in the first driving direction, the method further comprises:

determining a first green light duration in each signal period in the first driving direction based on a preset difference range of green light duration and the sum of green light durations in the first driving direction.

7. The method of claim 2, wherein in response to adjusting the variable lane from the first driving direction to the second driving direction, the method further comprises:

determining (305) adjusted second traffic data and second lane number in the second driving direction; and

controlling (306) a traffic light state in the second driving direction based on the adjusted second traffic data and second lane number in the second driving direction.

8. The method of claim 7, wherein controlling a traffic light state in the second driving direction based on the adjusted second traffic data and second lane number comprises:

determining a second green signal ratio in the second driving direction based on a period duration of the traffic light, a total waste duration in each signal period, a red light duration within each signal period and a traffic flow from the adjusted second traffic data;
determining a second predicted traffic volume in the second driving direction based on the adjusted second lane number, a second historical lane number and a second historical traffic volume; and
determining a sum of green light durations in each signal period in the second driving direction based on the second green signal ratio and the second predicted traffic volume.

9. The method of claim 8, wherein after determining a sum of green light durations in each signal period in the second driving direction, the method further comprises:
determining a second green light duration in each signal period in the second driving direction based on a preset difference range of green light duration and the sum of green light durations in the second driving direction.

10. An apparatus (400) for controlling a variable lane provided at an intersection with a traffic light, a direction of the variable lane being indicated by a guide arrow in an indication sign mounted above the variable lane, comprising:

a first acquiring module (410), configured to acquire first traffic data for a first driving direction corresponding to the variable lane and second traffic data for a second driving direction of a lane adjacent to the variable lane;
a first determining module (420), configured to determine a first saturation in the first driving direction based on the first traffic data and determining a second saturation in the second driving direction based on the second traffic data;
a second determining module (430), configured to determine an imbalance coefficient between the first driving direction and the second driving direction based on the first saturation and the second saturation; and
a controlling module (440), configured to control a driving direction of the variable lane based on the imbalance coefficient;
**characterized in that**,
the first determining module is specifically configured to:

determine the first saturation based on a green light duration, a waste duration, a red light queue length, and a saturated time headway in each signal period comprised in the first traffic data for the first driving direction; and
determine the second saturation based on a green light duration, a waste duration, a red light queue length, and a saturated time headway in each signal period comprised in the second traffic data for the second driving direction,
wherein the first saturation represents a ratio of an actual traffic flow of the variable lane to a saturated traffic flow of the variable lane, and the second saturation represents a ratio of an actual traffic flow of the lane adjacent to the variable lane to a saturated traffic flow of the lane adjacent to the variable lane.

11. A computer device, comprising a processor and a memory for storing a computer program executable by the processor, the processor is configured to perform the method of any of claims 1 to 9 when the computer program is executed.

12. A non-transitory computer-readable storage medium stored with a computer program thereon, wherein when the computer program is executed by a processor, the method of any of claims 1 to 9 is implemented.

13. A computer program product, wherein comprising a computer program, the computer program performs the method of any of claims 1 to 9 when executed by a processor.

**Patentansprüche**

1. Verfahren zur Steuerung einer variablen Spur, die an einer Kreuzung mit einer Ampel bereitgestellt ist, wobei eine Richtung der variablen Spur durch einen Führungspfeil in einem Hinweisschild angezeigt wird, das oberhalb der variablen Spur montiert ist, umfassend:

Erfassen (101, 201, 301) von ersten Verkehrsdaten für eine erste Fahrrichtung entsprechend der variablen Spur und zweiten Verkehrsdaten für eine zweite Fahrrichtung einer Spur benachbart zu der variablen Spur;

Bestimmen (102, 202, 302) einer ersten Sättigung in der ersten Fahrrichtung basierend auf den ersten Verkehrsdaten und Bestimmen einer zweiten Sättigung in der zweiten Fahrrichtung basierend auf den zweiten Verkehrsdaten;

Bestimmen (103, 203, 303) eines Ungleichgewichtskoeffizienten zwischen der ersten Fahrrichtung und der zweiten Fahrrichtung basierend auf der ersten Sättigung und der zweiten Sättigung; und

Steuern (104, 304) einer Fahrrichtung der variablen Spur basierend auf dem Ungleichgewichtskoeffizienten; **dadurch gekennzeichnet, dass** das Bestimmen der ersten Sättigung in der ersten Fahrrichtung und der zweiten Sättigung in der zweiten Fahrrichtung Folgendes umfasst:

Bestimmen der ersten Sättigung basierend auf einer Grünlichtdauer, einer Verlustdauer, einer Rotlichtwarteschlangenlänge und einem Fortschritt der gesättigten Zeit in jeder Signalperiode, die in den ersten Verkehrsdaten für die erste Fahrrichtung enthalten sind; und

Bestimmen der zweiten Sättigung basierend auf einer Grünlichtdauer, einer Verlustdauer, einer Rotlichtwarteschlangenlänge und einem Fortschritt der gesättigten Zeit in jeder Signalperiode, die in den zweiten Verkehrsdaten für die zweite Fahrrichtung enthalten sind,

wobei die erste Sättigung ein Verhältnis eines tatsächlichen Verkehrsflusses der variablen Spur zu einem gesättigten Verkehrsfluss der variablen Spur darstellt, und die zweite Sättigung ein Verhältnis eines tatsächlichen Verkehrsflusses der Spur benachbart zu der variablen Spur zu einem gesättigten Verkehrsfluss der Spur benachbart zu der variablen Spur darstellt.

2. Verfahren nach Anspruch 1, wobei das Steuern einer Fahrrichtung der variablen Spur basierend auf dem Ungleichgewichtskoeffizienten Folgendes umfasst:

Erfassen (204) von Attributinformationen einer Kreuzung, wo sich die variable Spur befindet;

Bestimmen (205) eines Referenzbereichs zwischen der ersten Fahrrichtung und der zweiten Fahrrichtung basierend auf den Attributinformationen;

Beibehalten (206) einer ersten Fahrrichtung der variablen Spur, so dass sie sich nicht ändert, als Reaktion darauf, dass der Ungleichgewichtskoeffizient innerhalb des Referenzbereichs liegt; und

Einstellen (207) der variablen Spur von der ersten Fahrrichtung zu der zweiten Fahrrichtung als Reaktion darauf, dass der Ungleichgewichtskoeffizient nicht innerhalb des Referenzbereichs liegt.

3. Verfahren nach Anspruch 1, wobei das Verfahren ferner Folgendes umfasst:

Erfassen eines ersten Schwellenwerts der Rotlichtwarteschlange in der ersten Fahrrichtung und eines zweiten Schwellenwerts der Rotlichtwarteschlange in der zweiten Fahrrichtung; und

als Reaktion darauf, dass eine Rotlichtwarteschlangenlänge in der ersten Fahrrichtung länger als der erste Schwellenwert der Rotlichtwarteschlange ist, oder als Reaktion darauf, dass eine Rotlichtwarteschlangenlänge in der zweiten Fahrrichtung länger als der zweite Schwellenwert der Rotlichtwarteschlange ist, Einstellen der variablen Spur von der ersten Fahrrichtung zu der zweiten Fahrrichtung.

4. Verfahren nach einem der Ansprüche 1 bis 3, wobei als Reaktion auf das Einstellen der variablen Spur von der ersten Fahrrichtung zu der zweiten Fahrrichtung das Verfahren ferner Folgendes umfasst:

Bestimmen (305) der eingestellten ersten Verkehrsdaten und ersten Spurzahl in der ersten Fahrrichtung; und

Steuern (306) eines Ampelzustands in der ersten Fahrrichtung basierend auf den eingestellten ersten Verkehrsdaten und ersten Spurzahl.

5. Verfahren nach einem der Ansprüche 1 bis 4, wobei das Steuern eines Ampelzustands in der ersten Fahrrichtung basierend auf den eingestellten ersten Verkehrsdaten und ersten Spurzahl Folgendes umfasst:

Bestimmen eines ersten Grünsignalverhältnisses in der ersten Fahrrichtung basierend auf einer Periodendauer der Ampel, einer Gesamtverlustdauer in jeder Signalperiode, einer Rotlichtdauer innerhalb jeder Signalperiode und eines Verkehrsflusses anhand der eingestellten ersten Verkehrsdaten;

Bestimmen eines ersten vorhergesagten Verkehrsvolumens in der ersten Fahrrichtung basierend auf der eingestellten ersten Spurzahl, einer ersten historischen Spurzahl und einem ersten historischen Verkehrsvolumen; und

Bestimmen einer Summe von Grünlichtdauern in jeder Signalperiode in der ersten Fahrrichtung basierend auf dem ersten Grünsignalverhältnis und dem ersten vorhergesagten Verkehrsvolumen.

6. Verfahren nach einem der Ansprüche 1 bis 5, wobei nach dem Bestimmen einer Summe von Grünlichtdauern in jeder Signalperiode in der ersten Fahrrichtung das Verfahren ferner Folgendes umfasst:
Bestimmen einer ersten Grünlichtdauer in jeder Signalperiode in der ersten Fahrrichtung basierend auf einem vorab festgelegten Differenzbereich der Grünlichtdauer und der Summe von Grünlichtdauern in der ersten Fahrrichtung.

7. Verfahren nach Anspruch 2, wobei als Reaktion auf das Einstellen der variablen Spur von der ersten Fahrrichtung zu der zweiten Fahrrichtung das Verfahren ferner Folgendes umfasst:

Bestimmen (305) der eingestellten zweiten Verkehrsdaten und der zweiten Spurzahl in der zweiten Fahrrichtung; und
Steuern (306) eines Ampelzustands in der zweiten Fahrrichtung basierend auf den eingestellten zweiten Verkehrsdaten und der zweiten Spurzahl in der zweiten Fahrrichtung.

8. Verfahren nach Anspruch 7, wobei das Steuern eines Ampelzustands in der zweiten Fahrrichtung basierend auf den eingestellten zweiten Verkehrsdaten und der zweiten Spurzahl Folgendes umfasst:

Bestimmen eines zweiten Grünsignalverhältnisses in der zweiten Fahrrichtung basierend auf einer Periodendauer der Ampel, einer Gesamtverlustdauer in jeder Signalperiode, einer Rotlichtdauer innerhalb jeder Signalperiode und eines Verkehrsflusses anhand der eingestellten zweiten Verkehrsdaten;
Bestimmen eines zweiten vorhergesagten Verkehrsvolumens in der zweiten Fahrrichtung basierend auf der eingestellten zweiten Spurzahl, einer zweiten historischen Spurzahl und einem zweiten historischen Verkehrsvolumen; und
Bestimmen einer Summe von Grünlichtdauern in jeder Signalperiode in der zweiten Fahrrichtung basierend auf dem zweiten Grünsignalverhältnis und dem zweiten vorhergesagten Verkehrsvolumen.

9. Verfahren nach Anspruch 8, wobei nach dem Bestimmen einer Summe von Grünlichtdauern in jeder Signalperiode in der zweiten Fahrrichtung das Verfahren ferner Folgendes umfasst:
Bestimmen einer zweiten Grünlichtdauer in jeder Signalperiode in der zweiten Fahrrichtung basierend auf einem vorab festgelegten Differenzbereich der Grünlichtdauer und der Summe von Grünlichtdauern in der zweiten Fahrrichtung.

10. Gerät (400) zum Steuern einer variablen Spur, die an einer Kreuzung mit einer Ampel bereitgestellt ist, wobei eine Richtung der variablen Spur durch einen Führungspfeil in einem Hinweisschild angezeigt wird, das oberhalb der variablen Spur montiert ist, umfassend:

ein erstes Erfassungsmodul (410), das konfiguriert ist, um erste Verkehrsdaten für eine erste Fahrrichtung entsprechend der variablen Spur und zweite Verkehrsdaten für eine zweite Fahrrichtung einer Spur benachbart zu der variablen Spur zu erfassen;
ein erstes Bestimmungsmodul (420), das konfiguriert ist, um eine erste Sättigung in der ersten Fahrrichtung basierend auf den ersten Verkehrsdaten zu bestimmen und eine zweite Sättigung in der zweiten Fahrrichtung basierend auf den zweiten Verkehrsdaten zu bestimmen;
ein zweites Bestimmungsmodul (430), das konfiguriert ist, um einen Ungleichgewichtskoeffizienten zwischen der ersten Fahrrichtung und der zweiten Fahrrichtung basierend auf der ersten Sättigung und der zweiten Sättigung zu bestimmen; und
ein Steuerungsmodul (440), das konfiguriert ist, um eine Fahrrichtung der variablen Spur basierend auf dem Ungleichgewichtskoeffizienten zu steuern;
**dadurch gekennzeichnet, dass** das erste Bestimmungsmodul spezifisch konfiguriert ist zum:

Bestimmen der ersten Sättigung basierend auf einer Grünlichtdauer, einer Verlustdauer, einer Rotlichtwarteschlangenlänge und einem Fortschritt der gesättigten Zeit in jeder Signalperiode, die in den ersten Verkehrsdaten für die erste Fahrrichtung enthalten sind; und
Bestimmen der zweiten Sättigung basierend auf einer Grünlichtdauer, einer Verlustdauer, einer Rotlichtwarteschlangenlänge und einem Fortschritt der gesättigten Zeit in jeder Signalperiode, die in den zweiten Verkehrsdaten für die zweite Fahrrichtung enthalten sind,
wobei die erste Sättigung ein Verhältnis eines tatsächlichen Verkehrsflusses der variablen Spur zu einem gesättigten Verkehrsfluss der variablen Spur darstellt und die zweite Sättigung ein Verhältnis eines tatsächlichen Verkehrsflusses der Spur benachbart zu der variablen Spur zu einem gesättigten Verkehrsfluss der Spur benachbart zu der variablen Spur darstellt.

11. Computergerät, umfassend einen Prozessor und einen Speicher zum Speichern eines Computerprogramms, das von dem Prozessor ausgeführt werden kann, wobei der Prozessor konfiguriert ist, um das Verfahren nach einem der Ansprüche 1 bis 9 durchzuführen, wenn das Computerprogramm ausgeführt wird.

12. Nichtflüchtiges computerlesbares Speichermedium, das mit einem Computerprogramm darauf gespeichert ist, wobei, wenn das Computerprogramm von einem Prozessor ausgeführt wird, das Verfahren nach einem der Ansprüche 1 bis 9 implementiert wird.

13. Computerprogrammprodukt, umfassend ein Computerprogramm, wobei das Computerprogramm das Verfahren nach einem der Ansprüche 1 bis 9 durchführt, wenn es von einem Prozessor ausgeführt wird.

**Revendications**

1. Procédé de commande d'une voie variable prévue à une intersection avec un feu de circulation, une direction de la voie variable étant indiquée par une flèche de guidage dans un panneau de signalisation monté au-dessus de la voie variable, comprenant :

   l'acquisition (101, 201, 301) de premières données de circulation pour une première direction de conduite correspondant à la voie variable et des deuxièmes données de circulation pour une deuxième direction de conduite d'une voie adjacente à la voie variable ;
   la détermination (102, 202, 302) d'une première saturation dans la première direction de conduite sur la base des premières données de circulation et la détermination d'une deuxième saturation dans la deuxième direction de conduite sur la base des deuxièmes données de circulation ;
   la détermination (103, 203, 303) d'un coefficient de déséquilibre entre la première direction de conduite et la deuxième direction de conduite sur la base de la première saturation et de la deuxième saturation ; et
   la commande (104, 304) d'une direction de conduite de la voie variable sur la base du coefficient de déséquilibre ;
   **caractérisé en ce que** la détermination de la première saturation dans la première direction de conduite et de la deuxième saturation dans la deuxième direction de conduite comprend :

   la détermination de la première saturation sur la base d'une durée de feu vert, d'une durée de perte de temps, d'une longueur de file d'attente au feu rouge, et d'un progrès de temps de saturation dans chaque période de signal comprise dans les premières données de circulation pour la première direction de conduite ; et
   la détermination de la deuxième saturation sur la base d'une durée de feu vert, d'une durée de perte de temps, d'une longueur de file d'attente au feu rouge, et d'un progrès de temps de saturation dans chaque période de signal comprise dans les deuxièmes données de circulation pour la deuxième direction de conduite,
   dans lequel la première saturation représente un rapport d'un débit de circulation réelle de la voie variable sur un débit de circulation saturée de la voie variable, et la deuxième saturation représente un rapport d'un débit de circulation réelle de la voie adjacente à la voie variable sur un débit de circulation saturée de la voie adjacente à la voie variable.

2. Procédé selon la revendication 1, dans lequel la commande d'une direction de conduite de la voie variable sur la base du coefficient de déséquilibre comprend :

   l'acquisition (204) d'informations d'attribut d'une intersection à laquelle la voie variable est située ;
   la détermination (205) d'une plage de référence entre la première direction de conduite et la deuxième direction de conduite sur la base des informations d'attribut ;
   le maintien (206) d'une première direction de conduite de la voie variable inchangée en réponse au fait que le coefficient de déséquilibre est à l'intérieur de la plage de référence ; et
   l'ajustement (207) de la voie variable de la première direction de conduite à la deuxième direction de conduite en réponse au fait que le coefficient de déséquilibre n'est pas à l'intérieur de la plage de référence.

3. Procédé selon la revendication 1, dans lequel le procédé comprend en outre :

l'acquisition d'un premier seuil de file d'attente au feu rouge dans la première direction de conduite et d'un deuxième seuil de file d'attente au feu rouge dans la deuxième direction de conduite ; et
en réponse au fait qu'une longueur de file d'attente au feu rouge dans la première direction de conduite est supérieure au premier seuil de file d'attente au feu rouge, ou en réponse au fait qu'une longueur de file d'attente au feu rouge dans la deuxième direction de conduite est supérieure au deuxième seuil de file d'attente au feu rouge, l'ajustement de la voie variable de la première direction de conduite à la deuxième direction de conduite.

4. Procédé selon l'une des revendications 1 à 3, dans lequel, en réponse à l'ajustement de la voie variable de la première direction de conduite à la deuxième direction de conduite, le procédé comprend en outre :

la détermination (305) de premières données de circulation ajustées et d'un premier numéro de voie dans la première direction de conduite ; et
la commande (306) d'un état de feu de circulation dans la première direction de conduite sur la base des premières données de circulation ajustées et du premier numéro de voie.

5. Procédé selon l'une des revendications 1 à 4, dans lequel la commande d'un état de feu de circulation dans la première direction de conduite sur la base des premières données de circulation ajustées et du premier numéro de voie comprend :

la détermination d'un premier taux de signal vert dans la première direction de conduite sur la base d'une durée de période du feu de circulation, d'une durée totale de temps perdu dans chaque période de signal, d'une durée de feu rouge à l'intérieur de chaque période de signal et d'un débit de circulation à partir des premières données de circulation ajustées ;
la détermination d'un premier volume de circulation prédit dans la première direction de conduite sur la base du premier numéro de voie ajusté, d'un premier numéro de voie historique et d'un premier volume de circulation historique ; et
la détermination d'une somme de durées de feu vert dans chaque période de signal dans la première direction de conduite sur la base du premier taux de signal vert et du premier volume de circulation prédit.

6. Procédé selon l'une des revendications 1 à 5, dans lequel, après la détermination d'une somme de durées de feu vert dans chaque période de signal dans la première direction de conduite, le procédé comprend en outre :
la détermination d'une première durée de feu vert dans chaque période de signal dans la première direction de conduite sur la base d'une plage de différence préréglée de durée de feu vert et de la somme de durées de feu vert dans la première direction de conduite.

7. Procédé selon la revendication 2, dans lequel, en réponse à l'ajustement de la voie variable de la première direction de conduite à la deuxième direction de conduite, le procédé comprend en outre :

la détermination (305) de deuxièmes données de circulation ajustées et d'un deuxième numéro de voie ajusté dans la deuxième direction de conduite ; et
la commande (306) d'un état de feu de circulation dans la deuxième direction de conduite sur la base des deuxièmes données de circulation ajustées et du deuxième numéro de voie ajusté dans la deuxième direction de conduite.

8. Procédé selon la revendication 7, dans lequel la commande d'un état de feu de circulation dans la deuxième direction de conduite sur la base des deuxièmes données de circulation ajustées et du deuxième numéro de voie ajusté comprend :

la détermination d'un deuxième taux de signal vert dans la deuxième direction de conduite sur la base d'une durée de période du feu de circulation, d'une durée totale de temps perdu dans chaque période de signal, d'une durée de feu rouge à l'intérieur de chaque période de signal et d'un débit de circulation à partir des deuxièmes données de circulation ajustées ;
la détermination d'un deuxième volume de circulation prédit dans la deuxième direction de conduite sur la base du deuxième numéro de voie ajusté, d'un deuxième numéro de voie historique et d'un deuxième volume de circulation historique ; et

la détermination d'une somme de durées de feu vert dans chaque période de signal dans la deuxième direction de conduite sur la base du deuxième taux de signal vert et du deuxième volume de circulation prédit.

9. Procédé selon la revendication 8, dans lequel, après la détermination d'une somme de durées de feu vert dans chaque période de signal dans la deuxième direction de conduite, le procédé comprend en outre :
la détermination d'une deuxième durée de feu vert dans chaque période de signal dans la deuxième direction de conduite sur la base d'une plage de différence préréglée de durée de feu vert et de la somme de durées de feu vert dans la deuxième direction de conduite.

10. Appareil (400) de commande d'une voie variable prévue à une intersection avec un feu de circulation, une direction de la voie variable étant indiquée par une flèche de guidage dans un panneau de signalisation monté au-dessus de la voie variable, comprenant :

un premier module d'acquisition (410), configuré pour acquérir des premières données de circulation pour une première direction de conduite correspondant à la voie variable et des deuxièmes données de circulation pour une deuxième direction de conduite d'une voie adjacente à la voie variable ;
un premier module de détermination (420), configuré pour déterminer une première saturation dans la première direction de conduite sur la base des premières données de circulation et déterminer une deuxième saturation dans la deuxième direction de conduite sur la base des deuxièmes données de circulation ;
un deuxième module de détermination (430), configuré pour déterminer un coefficient de déséquilibre entre la première direction de conduite et la deuxième direction de conduite sur la base de la première saturation et de la deuxième saturation ; et
un module de commande (440), configuré pour commander une direction de conduite de la voie variable sur la base du coefficient de déséquilibre ;
**caractérisé en ce que** le premier module de détermination est spécifiquement configuré pour :

déterminer la première saturation sur la base d'une durée de feu vert, d'une durée de perte de temps, d'une longueur de file d'attente au feu rouge, et d'un progrès de temps de saturation dans chaque période de signal comprise dans les premières données de circulation pour la première direction de conduite ; et
déterminer la deuxième saturation sur la base d'une durée de feu vert, d'une durée de perte de temps, d'une longueur de file d'attente au feu rouge, et d'un progrès de temps de saturation dans chaque période de signal comprise dans les deuxièmes données de circulation pour la deuxième direction de conduite, dans lequel la première saturation représente un rapport d'un débit de circulation réelle de la voie variable sur un débit de circulation saturée de la voie variable, et la deuxième saturation représente un rapport d'un débit de circulation réelle de la voie adjacente à la voie variable sur un débit de circulation saturée de la voie adjacente à la voie variable.

11. Dispositif informatique, comprenant un processeur et une mémoire pour stocker un programme informatique exécutable par le processeur, le processeur étant configuré pour réaliser le procédé selon l'une des revendications 1 à 9 lorsque le programme informatique est exécuté.

12. Support de stockage non transitoire lisible par ordinateur sur lequel est stocké un programme informatique, dans lequel, lorsque le programme informatique est exécuté par un processeur, le procédé selon l'une des revendications 1 à 9 est mis en œuvre.

13. Produit programme informatique comprenant un programme informatique, dans lequel le programme informatique réalise le procédé selon l'une des revendications 1 à 9 lorsqu'il est exécuté par un processeur.

```
                                                                              ┌─101
┌──────────────────────────────────────────────────────────────────────┐
│   acquiring traffic data for a first driving direction corresponding to │
│   the variable lane and traffic data for a second driving direction     │
│                   adjacent to the variable lane                         │
└──────────────────────────────────────────────────────────────────────┘
                                   │
                                   ▼                                          ┌─102
┌──────────────────────────────────────────────────────────────────────┐
│   determining a first saturation in the first driving direction and a   │
│   second saturation in the second driving direction based on the        │
│                          traffic data                                   │
└──────────────────────────────────────────────────────────────────────┘
                                   │
                                   ▼                                          ┌─103
┌──────────────────────────────────────────────────────────────────────┐
│   determining an imbalance coefficient between the first driving        │
│   direction and the second driving direction based on the first         │
│             saturation and the second saturation                        │
└──────────────────────────────────────────────────────────────────────┘
                                   │
                                   ▼                                          ┌─104
┌──────────────────────────────────────────────────────────────────────┐
│   controlling a driving direction of the variable lane based on the     │
│                    imbalance coefficient                                │
└──────────────────────────────────────────────────────────────────────┘
```

FIG. 1

acquiring traffic data for a first driving direction corresponding to the variable lane and traffic data for a second driving direction adjacent to the variable lane ⌐201

determining a first saturation in the first driving direction and a second saturation in the second driving direction based on the traffic data ⌐202

determining an imbalance coefficient between the first driving direction and the second driving direction based on the first saturation and the second saturation ⌐203

acquiring attribute information of an intersection where the variable lane is located ⌐204

determining a reference range between the first driving direction and the second driving direction based on the attribute information ⌐205

keeping a first driving direction of the variable lane unchanged in response to the imbalance coefficient being within the reference coefficient range ⌐206

adjusting the driving direction of the variable lane to the second driving direction in response to the imbalance coefficient being not within the reference coefficient range ⌐207

FIG. 2

acquiring traffic data for a first driving direction corresponding to the variable lane and traffic data for a second driving direction adjacent to the variable lane ⌐301

↓

determining a first saturation in the first driving direction and a second saturation in the second driving direction based on the traffic data ⌐302

↓

determining an imbalance coefficient between the first driving direction and the second driving direction based on the first saturation and the second saturation ⌐303

↓

controlling a driving direction of the variable lane based on the imbalance coefficient ⌐304

↓

in response to adjusting the driving direction of the variable lane to the second driving direction, determining the adjusted traffic data and lane numbers respectively corresponding to the first driving direction and the second driving direction ⌐305

↓                                                                306

controlling a signal light states respectively corresponding to the first driving direction and the second driving direction based on the adjusted traffic data and lane numbers respectively corresponding to the first driving direction and the second driving direction

FIG. 3

400

apparatus for controlling a variable lane

410

first acquiring module

420

first determining module

430

second determining module

440

controlling module

FIG. 4

500

501
computing unit

502
ROM

503
RAM

504

505
I/O interface

506
input unit

507
output unit

508
storage unit

509
communication unit

FIG. 5

**EP 4 083 958 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019122546 A1
- EP 3300053 A1